# EUROPÄISCHE PATENTSCHRIFT

(11) **EP 0 837 804 B1**
(45) Veröffentlichungstag und Bekanntmachung des Hinweises auf die Patenterteilung: **03.03.1999**
(21) Anmeldenummer: 96919585.8
(22) Anmeldetag: 25.05.1996
(51) Int. Cl.: B60T 8/48, F16L 55/05

(54) **SCHWINGUNGSDÄMPFER ZUR DÄMPFUNG VON FLÜSSIGKEITSSCHWINGUNGEN IN EINEM HYDRAULISCHEN, SCHLUPFGEREGELTEN BREMSSYSTEM VON KRAFTFAHRZEUGEN**
OSCILLATION DAMPER FOR DAMPING FLUID OSCILLATION IN A HYDRAULIC ANTI-SLIP CONTROL BRAKING SYSTEM IN MOTOR VEHICLES
AMORTISSEUR D'OSCILLATIONS POUR L'AMORTISSEMENT D'OSCILLATIONS D'UN LIQUIDE DANS UN SYSTEME DE FREINAGE HYDRAULIQUE ANTIPATINAGE D'UN VEHICULE A MOTEUR

(30) Priorität: 08.07.1995 DE 19524920
(43) Veröffentlichungstag der Anmeldung: 29.04.1998
(73) Patentinhaber: ROBERT BOSCH GMBH, 70442 Stuttgart (DE)
(72) Erfinder: SCHNEIDER, Steffen, D-71732 Tamm (DE); ALAZE, Norbert, D-71706 Markgröningen (DE); HOFMANN, Dirk, D-71636 Ludwigsburg (DE); PECHTOLD, Ulrich, D-71732 Tamm (DE); STRATMANN, Egon, D-71701 Schwieberdingen (DE); HÄCKER, Jürgen, D-71706 Markgröningen (DE); SCHWARZ, Hans-Friedrich, D-75417 Mühlacker (DE); MITTWOLLEN, Norbert, D-71706 Markgröningen (DE)
(86) Internationale Anmeldenummer: DE9600917
(87) Internationale Veröffentlichungsnummer: WO9702971

(56) Entgegenhaltungen:
- EP-A- 0 539 898
- DE-A- 1 475 829
- DE-A- 4 118 834
- DE-A- 4 336 464
- GB-A- 877 800
- US-A- 4 628 964

## Beschreibung

### Stand der Technik

Die Erfindung geht aus von einem Schwingungsdämpfer nach der Gattung des Patentanspruchs 1.

Es ist schon ein derartiger schwingungsdämpfer mit einer kreisförmigen, im wesentlichen ebenen Membrane bekannt (DE 43 36 464 A1). Ein die Membrane in der Gehäusebohrung haltender Verschlußdeckel dient als feste Begrenzungswand für den Hohlraum, der durch eine Bohrung des Deckels mit der Außenluft in Verbindung steht.

Der Schwingungsdämpfer dient dazu, im Antriebsschlupfregelbetrieb durch den im Bremssystem verwendeten Pumpentyp verursachte Längsschwingungen der in der Saugleitung der Pumpe befindlichen Bremsflüssigkeit sowie Schwingkavitation zu vermeiden, damit von der Pumpe ein ausreichend großer Volumenstrom für einen schnellen Druckaufbau in Radbremszylindern gefördert werden kann. Außerdem wird mit dem Schwingungsdämpfer bezweckt, den in, der Leitung zum Hauptbremszylinder auftretenden Druckstoß beim Beenden des Antriebsschlupfregelbetriebes zu mindern.

Um eine ausreichende Dämpfungswirkung zu erzielen, ist es erforderlich, ausreichend große Räume zu beiden Seiten der Membrane bereitzustellen, damit diese entsprechend große Volumina an Bremsflüssigkeit aufnehmen und abgeben können. Das Volumen der Räume ist im wesentlichen abhängig vom Leitungsvolumen zwischen Hauptbremszylinder und Hubkolbenpumpe, von deren Hubvolumen und Drehzahl sowie der hydraulischen Elastizität des von der Pumpe schwingungsangeregten Systems. Da bei modernen Bremssystemen die zwischen Hauptbremszylinder und Radbremszylindern gelegenen Elemente, wie Ventile, Pumpen, Leitungen und dergleichen vornehmlich aus Gründen der Gewichts- und Kosteneinsparung eine Verkleinerung ihres Bauvolumens und eine dicht gepackte Anordnung in einem sog. Hydroaggregat erfahren haben, bereitet es konstruktiv Schwierigkeiten, den einen relativ großen Einbaudurchmesser erfordernden bekannten Schwingungsdämpfertyp im Gehäuse des Hydroaggregats anzuordnen.

### Vorteile der Erfindung

Der erfindungsgemäße Schwingungsdämpfer mit den kennzeichnenden Merkmalen des Patentanspruchs 1 hat demgegenüber den Vorteil, daß sich das zur Schwingungsdämpfung erforderliche Volumen auf einen Raum kleinen Durchmessers und entsprechender axialer Ausdehnung erstreckt. Eine derartige Formgebung ist gewöhnlich ohne Schwierigkeiten in einem Gehäuse zu verwirklichen. Von Vorteil ist ferner die Bereitstellung des erforderlichen Dämpfungsvolumens zu beiden Seiten der Mantelwand des die Membrane bildenden Formteils. Dabei stellt der Stützkörper sicher, daß das Formteil bei Druckbeaufschlagung nicht zusammenbricht, aber dennoch mit Hilfe der Rinne in der Seitenfläche ausreichend Kompressionsvolumen mit kleiner Steifigkeit zur Verfügung steht. Schließlich ist noch das Übergreifen des Formteils über den Stützkörper bei der Montage und der Abdichtung in der Bohrung des Gehäuses von Vorteil.

Durch die in den Unteransprüchen aufgeführten Maßnahmen sind vorteilhafte Weiterbildungen und Verbesserungen des im Patentanspruch 1 angegebenen Schwingungsdämpfers möglich.

So ist im Anspruch 3 eine vorteilhafte Ausgestaltung für den Stützkörper offenbart.

Durch die im Anspruch 4 angegebene Maßnahme ist im Zusammenwirken von ebener Ansatzstirnfläche und formsteifer Bodenwand des Formteils stets eine durchgängige Verbindung zwischen dem Innenraum des Formteils und der Kammer des Ansatzes gegeben.

Mit der im Anspruch 5 gekennzeichneten Weiterbildung der Erfindung wird in vorteilhafter Weise erreicht, daß sich die Mantelwand des Formteils beim Anlegen an die Seitenflächen des Stützkörpers von dessen Fuß ausgehend in die Rinnen schmiegt. Das Einschließen von Luftblasen zwischen Mantelwand und Stützkörper wird dadurch vermieden.

Mit der im Anspruch 7 angegebenen Forgebung der Bodenwand des Formteils wird auf einfache Weise ein Offenhalten der zur Kammer im Stützkörper führenden Bohrung erreicht.

Die im Anspruch 8 gekennzeichnete Maßnahme stellt vorteilhafterweise einerseits die Abdichtung zwischen Stützkörper, Formteil und Gehäusebohrung sicher, andererseits wird die Mantelwand des Formteils gestrafft und dessen Bodenwand in Anlage an der Stirnfläche des Stützkörpers gehalten.

Mit der Weiterbildung der Erfindung nach Anspruch 9 wird auf kurzem Wege eine Ableitung der auf den Stützkörper einwirkenden hydraulischen Kräfte auf das Gehäuse erzielt.

Um eine im saugseitigen Druckbereich ausreichende Dämpfungswirkung zu erzielen, ist die Maßnahme gemäß Anspruch 10 getroffen. Dabei stellt die Ausgestaltung der Erfindung nach Anspruch 11 weitgehend sicher, daß ein vor Verschmutzung geschützter Luftaustausch gegeben ist.

Ein derartiger Schutz wird noch durch die Maßnehme gemäß Anspruch 12 erhöht, indem die Platte für Flüssigkeiten und Feststoffe undurchlässig ist. Insofern kann auf eine Abdeckkappe verzichtet werden.

Wenn ein ausreichend großes, an die Kammer des Stützkörpers angeschlossenes Luftvolumen bereitgestellt wird, kann die Weiterbildung der Erfindung nach Anspruch 13 angewendet werden. Dieses stellt bei einem wenig wahrscheinlichen Bruch der Mantelwand des Formteils sicher, daß keine Bremsflüssigkeit aus der Gehäusebohrung austreten kann. Ein Ausfall des mit dem erfindungsgemäßen Schwingungsdämpfer ausgestatteten Bremskreises ist dadurch verhindert. Durch die Abstimmung des Diffusionswiderstandes des Formteils und des Bauteils in der Verschlußscheibe wird vermieden, daß sich die Mantelwand des Formteils im Laufe der Zeit an den Stützkörper anlegt und eine Minderung der Dämpfungswirkung eintritt.

### Zeichnung

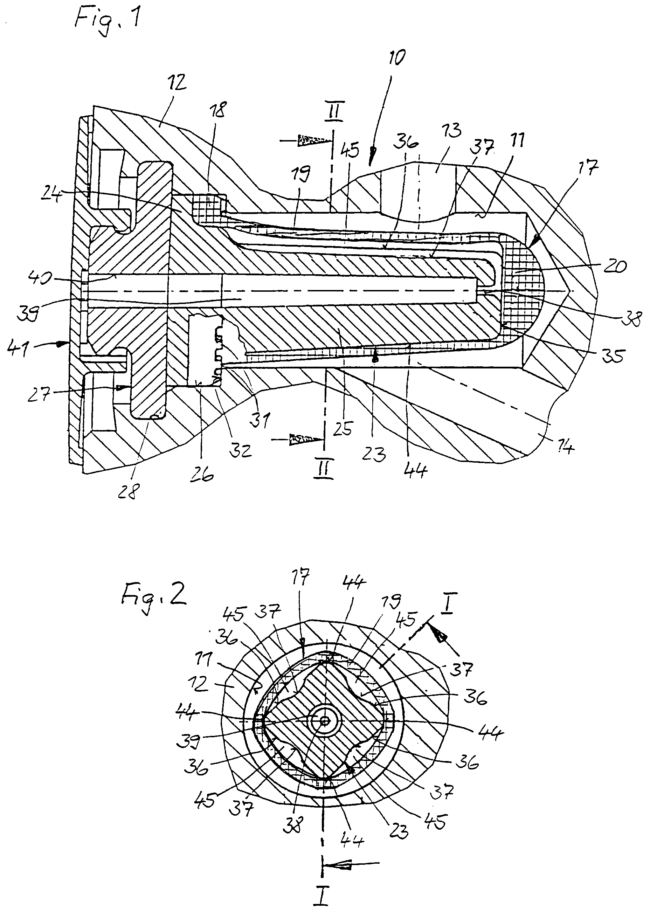

Ausführungsbeispiele der Erfindung sind in der Zeichnung vereinfacht dargestellt und in der nachfolgenden Beschreibung näher erläutert. Es zeigen Figur 1 einen Längsschnitt durch einen Schwingungsdämpfer, bestehend im wesentlichen aus einem elastomeren Formteil, einem Stützkörper und einer Verschlußscheibe in einer Gehäusebohrung, Figur 2 einen Querschnitt entlang der Linie II-II durch das Ausführungsbeispiel des Schwingungsdämpfers nach Figur 1 und Figuren 3 und 4 Längsschnitte des verschlußscheibenseitigen Abschnitts weiterer Ausführungsbeispiele von Schwingungsdämpfern.

### Beschreibung der Ausführungsbeispiele

Ein in Figur 1 der Zeichnung dargestellter Schwingungsdämpfer 10 für die Dämpfung von Flüssigkeitsschwingungen ist zur Verwendung in einem hydraulischen, schlupfgeregelten Bremssystem von Kraftfahrzeugen bestimmt, wie dies in der eingangs erwähnten Druckschrift DE 43 36 464 A1 beschrieben ist. Der Schwingungsdämpfer 10 ist in einer Bohrung 11 eines Gehäuses 12 angeordnet, in dem Ventile, Pumpen, Leitungen und weitere Elemente des vorstehend erwähnten Bremssystems aufgenommen sind. Die Bohrung 11 des Gehäuses 12 hat eine dem Mehrfachen ihres Durchmessers entsprechende Tiefe. Sie steht durch einen Leitungsabschnitt 13 mit einem Hauptbremszylinder mit einem Vorratsbehälter für Bremsflüssigkeit und durch einen Leitungsabschnitt 14 mit der Saugseite einer selbstansaugenden Hubkolbenpumpe sowie mit wenigstens einem Radbremszylinder in Verbindung. Mit der Pumpe ist im Antriebsschlupfregelbetrieb Bremsdruck im Radbremszylinder erzeugbar.

Der Schwingungsdämpfer 10 weist ein als Membrane wirkendes Formteil 17 aus dem gegen Bremsflüssigkeit beständigen Elastomer Ethylen-Propylen-Dien-Kautschuk (EPDM) auf. Aus dem in Figur 1 dargestellten Längsschnitt eines ersten Ausführungsbeispiels des Schwingungsdämpfers 10 ist erkennbar, daß das etwa hohlkegelstumpfförmig ausgebildete Formteil 17 eine von einem im Querschnitt verstärkten Öffnungsrand 10 ausgehende Mantelwand 19 hat, welche in einer innenseitig ebenen Bodenwand 20 des Formteils endet.

Innerhalb der Bohrung 11 des Gehäuses 12 befindet sich außerdem ein Stützkörper 23 mit einem kreisscheibenförmigen Fuß 24, von dem, achsgleich zur Bohrung 11, ein pyramidenstumpfförmiger Ansatz 25 ausgeht. Der Stützkörper 23 sowie das über den Ansatz 25 gestreifte Formteil 17 haben eine der Bohrungstiefe angenäherte Länge. Der Fuß 24 des Stützkörpers 23 ist passend in einer ersten Bohrungsstufe 26 aufgenommen und mündungsseitig der Bohrung 11 mit einer Verschlußscheibe 27 gehalten, welche in einer zweiten Bohrungsstufe 28 sitzt und durch Verstemmen am Gehäuse 12 befestigt ist.

In der ersten Bohrungsstufe 26 ist zwischen dem Fuß 24 und dem Ansatz 25 des Stützkörpers 23 auch dessen Öffnungsrand 18 aufgenommen. Der radialer Pressung unterworfene Öffnungsrand 18 dichtet den außerhalb des Formteils 17 gelegenen, mit Bremsflüssigkeit gefüllten Teil der Bohrung 11 gegen Außenluft ab. Am Öffnungsrand 18 in regelmäßiger Teilung angeformte, gegen die Bodenwand 20 des Formteils 17 gerichtete Vorsprünge 31 sind an einer radial verlaufenden Fläche 32 der ersten Bohrungsstufe 26 abgestützt. Sie bewirken, daß der Öffnungsrand 18 mit Vorspannung am Fuß 24 des Stützkörpers 23 angreift und diesen in Anlage an der Verschlußscheibe 27 hält.

Der Pyramidenstumpfförmige Ansatz 25 des Stützkörpers 23 weist, wie Figur 2 erkennen läßt, im wesentlichen quadratischen Querschnitt auf, d.h. der Ansatz hat vier zwischen dem Fuß 24 und einer fußabgewandten, der Bodenwand 20 des Formteils 17 zugekehrten Stirnfläche 35 verlaufende Seitenflächen 36. Abweichend vom dargestellten Ausführungsbeispiel kann der Ansatz 25 jedoch auch einen elliptischen, dreieck-, fünfeck-, vieleck-, Stern- oder kreisförmigen Querschnitt besitzen. Wesentlich ist, daß er keine scharfen Kanten hat. Etwa vom Fuße 24 ausgehend ist in jeder Seitenfläche 36 des Stützkörperansatzes 25 je eine Rinne 37 eingeformt. Die Rinnen 37 aller Seitenflächen sind auch in der Stirnfläche 35 des Ansatzes 25 fortgeführt, wo sie in deren Zentrum zusammentreffen. Dort münden sie in eine Bohrung 38 relativ kleinen Querschnitts, die mit einer Kammer 39 des Ansatzes 25 in Verbindung steht. Die Kammer 39 durchdringt den Fuß 24 des Stützkörpers 23 und steht durch eine Bohrung 40 der Verschlußscheibe 27 mit der Außenluft in Verbindung. Eine auf die Verschlußscheibe 27 aufgesprengte Abdeckkappe 41 schützt die Kammer 39 weitgehend vor dem Eindringen von Feuchtigkeit und Fremdkörpern.

Das hülsen-, kappen- oder hutförmige Formteil 17 hat im unmontierten Zustand eine Mantelwand 19 kreisringförmigen Querschnitts. Im montierten Zustand des Formteils 17 ist die Mantelwand 19 bei nicht betätigtem Hauptbremszylinder und nicht in Betrieb befindlicher Pumpe in der Weise elastisch verformt, daß sich diese an abgerundete Längskanten 44 des Ansatzes 25 abstützt und die den Seitenflächen 36 mit der Rinne 37 zugeordneten Wandabschnitte einen von der Kreisringform abweichenden, etwas gestreckten Querschnitt einnehmen. Die Mantelwand 19 des Formteils 17 begrenzt somit in ihrer Anordnung im Schwingungsdämpfer 10 einen von der mit Bremsflüssigkeit gefüllten Bohrung 11 abgetrennten, aus mehreren Teilräumen bestehenden, ansatzseitigen Hohlraum 45, der luftgefüllt ist und mit der Außenluft in Verbindung steht. Das Formteil 17 stellt mit seiner Mantelwand 19 eine elastische Membrane zwischen Bremsflüssigkeit und Luft dar.

Die Größe des Hohlraumes 45 ist beeinflußbar durch den großen und kleinen Durchmesser sowie die axiale Länge der Mantelwand 19, den Abstand der Mantelwand zum Ansatz 25, den Querschnitt des Ansatzes 25, die Bemessung und die Anzahl der Rinnen 37 in den Seitenflächen 36. Die Rinnen 37 können, abgesehen von ihrem fußseitigen Auslauf, eine gleichbleibende Tiefe haben und sich gegen die fußabgewandte Stirnfläche 35 in ihrer Breite verringern oder eine gleiche Breite und eine gegen die Stirnfläche zunehmende Tiefe haben oder sich nur während eines Teils der jeweiligen Seitenfläche 36 erstrecken. Auch kann die Anzahl der Rinnen 37 in den Seitenflächen 36 variiert werden. Wesentlich dabei ist jedoch, daß die Übergänge zwischen Rinne 37 und Seitenfläche 36 sowie Stirnfläche 35 abgerundet sind.

Der Schwingungsdämpfer 10 hat folgende Wirkungsweise:

Beim Betrieb der Hubkolbenpumpe zum Zweck der Antriebsschlupfregelung können in den mit Bremsflüssigkeit gefüllten Leitungsabschnitten 13 und 14 zwischen dem Hauptbremszylinder und der Saugseite der Pumpe Flüssigkeitslängsschwingungen sowie Schwingkavitation auftreten. Die Leitungsabschnitte 13 und 14 sind in Figur 1 dargestellt, im übrigen ist auf DE-OS 43 36 464 verwiesen, s. Seite 5. Die periodische Anregung der Schwingung ist durch die Bauart der Pumpe bedingt. Mit Hilfe des Schwingungsdämpfers 10, der mit dem Hohlraum 45 einen luftgefüllten Kompressionsraum und außerhalb der Mantelwand 19 mit der Bohrung 11 einen mit Bremsflüssigkeit gefüllten Expansionsraum bereitstellt, wird eine zusätzliche Elastizität bzw. Dämpfung in die Leitungsabschnitte 13 und 14 eingebracht, um die Eigenfrequenz der Bremsflüssigkeitssäule zwischen dem Hauptbremszylinder und der Hubkolbenpumpe zu sehr kleinen Werten hin zu verschieben, bis die Anregung durch die Pumpe im überkritischen Bereich erfolgt. Flüssigkeitslängsschwingungen sowie Schwingkavitation werden vermieden. Der Volumenstrom der von der Pumpe geförderten Bremsflüssigkeit wird vergleichmäßigt und wesentlich oder stark erhöht.

Während der Arbeit des Schwingungsdämpfers 10 treten folgende mechanische Abläufe am Formteil 17 auf: Während einer Kompressionsphase wird die Mantelwand 19 des Formteils 17 von der Bremsflüssigkeit in der Bohrung 11 zur Anlage an die Seitenflächen 36 des Stützkörperansatzes 25 gebracht. In Abhängigkeit von der Druckbeaufschlagung des Formteils 17 kann sich die Mantelwand 19 auch an die Rinnen 37 anlegen. Dabei wird die im Hohlraum 45, d.h. die sich zwischen der Mantelwand 19 und den Seitenflächen 36 sowie in den Rinnen 37 des Ansatzes 25 befindliche Luft komprimiert und durch die Bohrung 38 und die Kammer 39 des Stützkörpers teilweise zur Außenluft abgeleitet. Die vorangegangen beschriebene Gestaltung der Rinnen 37 stellt sicher, daß die Mantelwand 19 ausgehend vom fußseitigen Auslauf der jeweiligen Rinne sich an diese anschmiegt, was den Einschluß von Luftblasen zwischen Mantelwand 19 und Ansatz 25 verhindert. Außerdem wird durch die Formgebung der Bodenwand 20 des Formteils 17 als relativ drucksteifes Kugelsegment, beispielsweise als Halbkugel, erreicht, daß die im Bereich der Stirnfläche 35 des Stützkörperansatzes 25 gelegenen Rinnenabschnitte und die Bohrung 38 stets freibleiben.

Das Ausmaß der Verformung der Mantelwand 19 ist beispielsweise beeinflußbar durch die Eigenschaften des für das Formteil 17 verwendeten Werkstoffs, die Dicke der Mantelwand 19 und das Ausmaß der Vorspannung, der die Mantelwand 19 nach dem Überstreifen des Formteils 17 auf den Stützkörper 23 unterworfen ist. Daüberhinaus kann es zweckmäßig sein, die Mantelwand 19 des Formteils 17 zur Beeinflussung des Kompressionsvolumens auch unterschiedlich dick zu gestalten. Ferner kann auf die Kennlinie des Schwingungsdämpfers, insbesondere beim Kompressionshub der Mantelwand 19 durch einen entsprechend gewählten Durchmesser der Bohrung 38 Einfluß genommen werden. Für die Verbindung des Hohlraumes 45 zur Kammer 39 des Ansatzes 25 können statt der Bohrung 38 auch Schlitze oder Durchbrüche anderer Form oder mehrere Bohrungen Anwendung finden. Es muß jedenfalls sichergestellt sein, daß auch bei einer vom Hauptbremszylinder ausgehenden Belastung des Formteils 17 keine Verletzung der Mantelwand 19 an diesen Schlitzen, Durchbrüchen oder Bohrungen auftritt.

Das während der Expansionsphase des Schwingungsdämpfers 10 benötigte Expansionsvolumen wird durch die Bohrung 11 bereitgestellt und durch deren Abmessungen begrenzt. Bei der Expansion der Mantelwand 19 des Formteils 17 gegen den im Hohlraum 45 herrschenden Atmosphärendruck entfernen sich die entsprechenden Abschnitte der Mantelwand 19 von den Seitenflächen 36 des Stützkörperansatzes 25. Im weiteren Verlauf des Expansionshubes kann die Mantelwand 19 von den Längskanten 44 des Ansatzes 25 abheben und sich auch an die Umfangswand der Bohrung 11 anlegen. Auch hier muß sichergestellt sein, daß eine Verletzung der Mantelwand 19 an Querschnittsübergängen der Bohrung 11 verhindert wird. Dies kann durch eine Querschnittsverstärkung an den verschleißgefährdeten Stellen der Mantelwand 19 oder durch einen bremsflüssigkeitsdurchlässigen Stützkäfig im Bereich der Einmündungen der Leitungsabschnitte 13 und 14 in die Bohrung 11 geschehen.

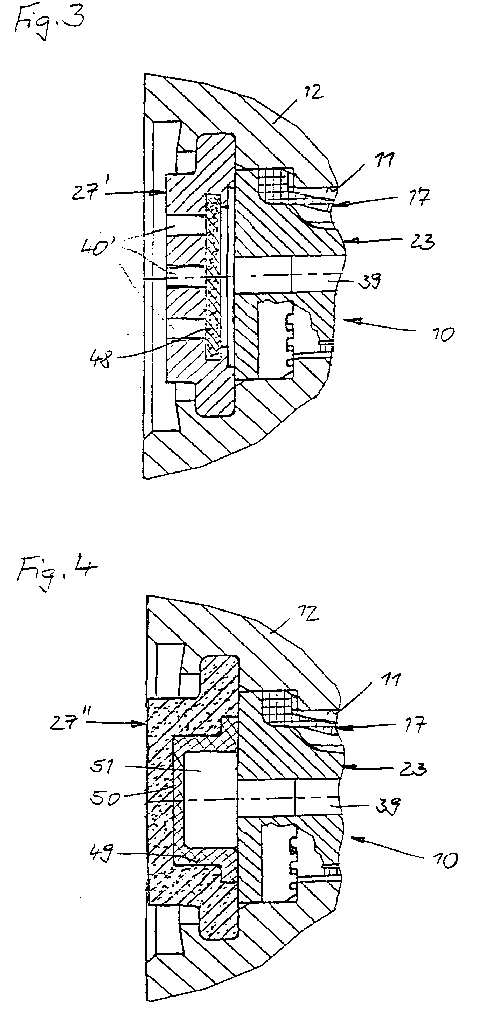

Beim in Figur 3 dargestellten zweiten Ausführungsbeispiel des Schwingungdämpfers 10 ist folgende wesentliche Abweichung zum ersten Ausführungsbeispiel gegeben: In der Verschlußscheibe 27' ist stützkörperseitig eine semipermeable Platte 48 aufgenommen. Diese steht einerseits mit der Kammer 39 im Ansatz 25 des Stützkörpers 23 in Verbindung, andererseits sind mehrere Bohrungen 40' in der Verschlußscheibe 27' für den Anschluß an die Außenluft vorgesehen. Die semipermeable Platte 48 stellt sicher, daß ein Austausch von Luft zwischen der Kammer 39 und der Atmosphäre stattfinden kann.

Für Flüssigkeiten, insbesondere Wasser, und Feststoffe ist die Platte 48 dagegen undurchlässig. Eine Abdeckkappe wie beim ersten Ausführungsbeispiel ist dann entbehrlich.

Beim in Figur 4 dargestellten dritten Ausführungsbeispiel des Schwingungsdämpfers 10 besteht die durchbruchfrei ausgebildete Verschlußscheibe 27'' aus einem porösen Werkstoff, beispielsweise aus Sintermetall. Die Verschlußscheibe 27'' ist daher für Luft durchlässig. In einer gegen den Stützkörper 23 offenen Ausnehmung 49 der Verschlußscheibe 27'' ist ein topfförmiges Bauteil 50 mit einem Hohlraum 51 angeordnet, welcher mit der Kammer 39 im Stützkörperansatz 25 in Verbindung steht. Das Bauteil 50 schließt die Kammer 39 dicht gegen die poröse Verschlußscheibe 27'' ab. Das Bauteil 50 besteht aus einem Elastomer, beispielsweise aus Silicon-Kautschuk, welcher einen gegenüber dem Werkstoff des Formteils 17 geringeren Diffusionswiderstand für Luft aufweist und für Bremsflüssigkeit undurchlässig ist. Hierdurch wird zum einen sichergestellt, daß durch die Mantelwand 19 des Formteils 17 in die Bremsflüssigkeit diffundierte Luft ersetzt wird durch Luft, welche durch das Bauteil 50 in den Hohlraum 51 diffundiert. Zum anderen wird verhindert, daß bei einem Bruch des Formteils 17 keine Bremsflüssigkeit aus der Bohrung 11 zur Außenluft gelangt.

## Patentansprüche

1. Schwingungsdämpfer (10) in einem hydraulischen, schlupfgeregelten Bremssystem von Kraftfahrzeugen zur Dämpfung von Flüssgkeitsschwingungen mit den folgenden Merkmalen:
- der Schwingungsdämpfer (10) ist in einer Leitung (13, 14) zwischen einem Hauptbremszylinder mit einem Vorratsbehälter für Bremsflüssigkeit und der Saugseite einer Hubkolbenpumpe angeordnet, mit der Bremsdruck in wenigstens einem Radbremszylinder erzeugbar ist,
- der Schwingungsdämpfer (10) weist eine in einer Bohrung (11) eines Gehäuses (12) angeordnete randseitig dicht eingespannte Membrane (17) aus einem Elastomer auf, welche auf ihrer einen Seite der Bremsflüssigkeit ausgesetzt ist und mit ihrer anderen Seite einen Hohlraum (45) begrenzt, der wenigstens annähernd Atmosphärendruck aufweist,
- der Hohlraum (45) wiederum ist durch einen Stützkörper (23) begrenzt, an den die Membrane (17) von der Bremsflüssigkeit anlegbar ist,
gekennzeichnet durch die weiteren Merkmale:
- der Stützkörper (23) weist einen in der Bohrung (11) befestigten Fuß (24) auf, von dem ausgehend sich ein verjüngen-der Ansatz (25) in die Bohrung (11) erstreckt, der von einem hülsenförmigen, die Membrane bildenden Formteil (17) umhüllt ist,
- der Ansatz (25) ist an seiner wenigstens einen Seitenfläche (36) mit wenigstens einer gegen den Fuß (24) verlaufenden Rinne (37) versehen,
- die Rinne (37) befindet sich an der dem Formteil (17) zugewandten Fläche des Ansatzes (25),
- der Hohlraum (45) liegt zwischen dem Ansatz (25) und dem Formteil (17),
- der Hohlraum (45) ist mit einer Kammer (39) im Ansatz (25) verbunden, welche eine Verbindung zur Außenluft aufweist.

2. Schwingungsdämpfer nach Anspruch 1, dadurch gekennzeichnet, daß die Bohrung (11) des Gehäuses (12) eine dem Mehrfachen ihres Durchmessers entsprechende Tiefe hat und der Stützkörper (23) sowie das Formteil (17) eine der Bohrungstiefe angenäherte Länge haben.

3. Schwingungsdämpfer nach Anspruch 1, dadurch gekennzeichnet, daß der Ansatz (25) des Stützkörpers (23) wenigstens annähernd einen regulären Pyramidenstumpf mit wenigstens drei Seitenflächen (36) bildet und daß das Formteil (17) im unbelasteten Zustand mit seiner Mantelwand (19) an den Längskanten (44) des Ansatzes (25) abgestützt ist, während im belasteten Zustand sich die Mantelwand (19) auch an die Seitenflächen (36) des Ansatzes (25) sowie an die Rinnen (37) anschmiegt.

4. Schwingungsdämpfer nach Anspruch 1, dadurch gekennzeichnet, daß die wenigstens eine Rinne (37) an einer fußabgewandten Stirnfläche (35) des Ansatzes (25) fortgesetzt ist und dort in eine in die Kammer (39) führende Bohrung (38) kleinen Durchmessers mündet und daß das Formteil (17) mit einer innenseitig wenigstens annähernd ebenen, weitgehend formsteifen Bodenwand (20) an der fußabgewandten Stirnfläche (35) des Ansatzes (25) abgestützt ist.

5. Schwingungsdämpfer nach Anspruch 4, dadurch gekennzeichnet, daß die Rinne (37), abgesehen von ihrem fußseitigen Auslauf, eine gleichbleibende Tiefe hat und sich gegen die fußabgewandte Stirnfläche (35) des Ansatzes (25) in ihrer Breite verringert oder eine gleiche Breite und eine gegen die fußabgewandte Stirnfläche (35) zunehmende Tiefe hat.

6. Schwingungsdämpfer nach Anspruch 3, dadurch gekennzeichnet, daß die Mantelwand (19) des Formteils (17) gleiche Dicke hat.

7. Schwingungsdämpfer nach Anspruch 4, dadurch gekennzeichnet, daß die Bodenwand (20) des Formteils (17) als Kugelsegment, vorzugsweise als Halbkugel, geformt ist.

8. Schwingungsdämpfer nach Anspruch 1, dadurch gekennzeichnet, daß der Öffnungsrand (18) des Formteils (17) unter radialer Vorspannung zwischen dem Stützkörper (23) und einer Bohrungsstufe (26) des Gehäuses (12) dicht in der Gehäusebohrung (11) gehalten ist, während außen am Öffnungsrand (18) angeformte, gegen eine radiale Fläche (32) der Bohrungsstufe (26) gerichtete Vorsprünge (31) an dieser radialen Fläche (32) abgestützt sind.

9. Schwingungsdämpfer nach Anspruch 8, dadurch gekennzeichnet, daß der Stützkörper (23) durch eine in die Bohrung (11) des Gehäuses (12) mündungsseitig eingestemmte Verschlußscheibe (27) gegen die Vorspannung der Vorsprünge (31) am Öffnungsrand (18) des Formteils (17) gehalten ist.

10. Schwingungsdämpfer nach Anspruch 9, dadurch gekennzeichnet, daß die Kammer (39) im Ansatz (25) des Stützkörpers (23) wenigstens mittelbar durch mindestens eine Bohrung (40) der Verschlußscheibe (27) mit der Außenluft in Verbindung steht.

11. Schwingungdämpfer nach Anspruch 10, dadurch gekennzeichnet, daß die Bohrung (11) des Gehäuses (12) außen mit einer an der Verschlußscheibe (27) aufgeschnappten Abdeckkappe (41) weitgehend verschlossen ist.

12. Schwingungsdämpfer nach Anspruch 10, dadurch gekennzeichnet, daß die Verschlußscheibe (27') stützkörperseitig eine mit der Kammer (39) im Ansatz (25) des Stützkörpers (23) in Verbindung stehende semipermeable Platte (48) für den Luftaustausch mit der Außenluft trägt.

13. Schwingungsdämpfer nach Anspruch 9, dadurch gekennzeichnet, daß die Bohrung (11) des Gehäuses (12) durch eine durchbruchfreie Verschlußscheibe (27'') aus einem porösen Werkstoff verschlossen ist und gegen den Stützkörper (23) eine Ausnehmung (49) hat, in der ein die Kammer (39) des Stützkörpers (23) dicht abschließendes Bauteil (50) aus einem Werkstoff aufgenommen ist, welcher einen gegenüber dem Formteil (17) geringeren Diffusionswiderstand für Luft aufweist und für Bremsflüssigkeit undurchlässig ist.

## Claims

1. Vibration damper (10) in a hydraulic tractioncontrolled brake system of motor vehicles for damping fluid vibrations, having the following features:
- the vibration damper (10) is arranged in a conduit (13, 14) between a brake master cylinder having a reservoir for brake fluid and the suction side of a reciprocating piston pump, by means of which brake pressure can be generated in at least one wheel-brake cylinder,
- the vibration damper (10) has an elastomeric diaphragm (17) which is arranged in a bore (11) of a housing (12) and is sealingly clamped along the edge and which, on one side, is exposed to the break fluid and, on its other side, delimits a cavity (45) which is at least approximately at atmospheric pressure,
- the cavity (45), in turn, is delimited by a supporting body (23), onto which the diaphragm (17) can be laid by the brake fluid,
characterized by the further features:
- the supporting body (23) has a foot (24) which is fastened in the bore (11) and from which a tapering extension (25) extends into the bore (11), the said extension being encased by a sleeve-shaped moulding (17) forming the diaphragm,
- the extension (25) is provided, on at least one side face (36), with at least one groove (37) running towards the foot (24),
- the groove (27) is located on that face of the extension (25) which confronts the moulding (17),
- the cavity (45) is located between the extension (25) and the moulding (17),
- the cavity (45) is connected to a chamber (39) in the extension (25) , the said chamber having a connection to the outside air.

2. Vibration damper according to Claim 1, characterized in that the bore (11) of the housing (12) has a depth corresponding to a multiple of the diameter of the said bore, and the supporting body (23) and moulding (17) have a length approximate to the bore depth.

3. Vibration damper according to Claim 1, characterized in that the extension (25) of the supporting body (23) forms at least approximately a regular truncated pyramid having at least three side faces (36), and in that, in the non-loaded state, the moulding (17) is supported with its outer wall (19) on the longitudinal edges (44) of the extension (25), whilst, in the loaded state, the outer wall (19) also nestles against the side faces (36) of the extension (25) and against the grooves (37).

4. Vibration damper according to Claim 1, characterized in that the at least one groove (37) is continued on an end face (35) of the extension (25), the said end face facing away from the foot, and opens there into a bore (38) of small diameter leading into the chamber (39), and in that the moulding (17) is supported with a largely dimensionally rigid bottom wall (20), at least approximately plane on the inside, on that end face (35) of the extension (25) which faces away from the foot.

5. Vibration damper according to Claim 4, characterized in that the groove (37) has a constant depth, with the exception of its foot-side termination, and decreases in width towards that end face (35) of the extension (25) facing away from the foot or has an equal width and a depth increasing towards the end face (35) facing away from the foot.

6. Vibration damper according to Claim 3, characterized in that the outer wall (19) of the moulding (17) has an equal thickness.

7. Vibration damper according to Claim 4, characterized in that the bottom wall (20) of the moulding (17) is shaped as a spherical segment, preferably as a hemisphere.

8. Vibration damper according to Claim 1, characterized in that the orifice edge (18) of the moulding (17) is sealingly held in the housing bore (11) under radial prestress between the supporting body (23) and a bore step (26) of the housing (12), whilst projections (31) integrally formed at the orifice edge (18) on the outside and directed towards a radial face (32) of the bore step (26) are supported on this radial face (32).

9. Vibration damper according to Claim 1, characterized in that the supporting body (23) is held counter to the prestress of the projections (31) at the orifice edge (18) of the moulding (17) by means of a closing disc (27) mortised into the bore (11) of the housing (12) on the mouth side.

10. Vibration damper according to Claim 9, characterized in that the chamber (39) in the extension (25) of the supporting body (23) is connected to the outside air at least indirectly by means of at least one bore (40) of the closing disc (27).

11. Vibration damper according to Claim 10, characterized in that the bore (11) of the housing (12) is largely closed on the outside by means of a cover cap (41) snapped on the closing disk (27).

12. Vibration damper according to Claim 10, characterized in that the closing disc (27') carries, on the supporting-body side, a semipermeable plate (48) connected to the chamber (39) in the extension (25) of the supporting body (23) and intended for air exchange with the outside air.

13. Vibration damper according to Claim 9, characterized in that the bore (11) of the housing (12) is closed by means of a perforation-free closing disk (27'') made of a porous material and has, towards the supporting body (23) a recess (49) which receives a component (50) sealingly closing off the chamber (39) of the supporting body (23) and made of a material which has an air diffusion resistance lower than that of the moulding (17) and which is impermeable to brake fluid.

## Revendications

1. Amortisseur d'oscillations (10) dans un système de freinage hydraulique, avec régulation d'antipatinage, pour véhicules à moteur, servant à amortir des oscillations de liquide ,amortisseur qui présente les particularités suivantes :
• l'amortisseur d'oscillations (10) est disposé dans une conduite (13, 14) entre un maître cylindre de freinage avec un réservoir de liquide de freinage et le côté de l'aspiration d'une pompe à piston alternatif, avec laquelle on produit la pression de freinage dans au moins un cylindre de freinage de roue,
• l'amortisseur d'oscillations (10) présente une membrane (17) en un élastomère, qui est disposée dans un alésage (11) d'un boitier (12) et qui est insérée de façon étanche du côté des bords, membrane qui est exposée sur l'un de ses côtés au liquide de freinage, et qui délimite par son autre côté une cavité (45), qui est au moins de façon approximative à la pression atmosphérique,
• la cavité (45) à son tour est limitée par un corps de soutien (23) sur lequel la membrane (17) peut être appliquée par le liquide de freinage,
• caractérisé par les autres particularités suivantes :
• le corps de soutien (23) présente un pied (24) fixé dans l'alésage (11), en partant duquel un appendice (25), qui va en se rétrécissant, s'étend dans l'alésage (11), qui est enveloppé par une pièce moulée (17), en forme de manchon, qui constitue la membrane,
• l'appendice (25) est pourvu sur au moins l'une de ses faces latérales (36) d'au moins une dépression (37) qui s'étend vers le pied (24),
• la dépression (37) se trouve sur la surface de l'appendice (25) qui est tournée vers la pièce moulée (17),
• la cavité (45) se trouve entre l'appendice (25) et la pièce moulée (17),
• la cavité (45) est reliée à une chambre (39) dans l'appendice (25), qui présente une liaison avec l'air extérieur.

2. Amortisseur d'oscillations selon la revendication 1,
caractérisé en ce que
l'alésage (11) du boîtier (12) a une profondeur égale à plusieurs fois son diamètre et le corps de soutien (23), ainsi que la pièce moulée (17) ont une longueur qui est voisine de la profondeur de l'alésage.

3. Amortisseur d'oscillations selon la revendication 1,
caractérisé en ce que
• l'appendice (25) du corps de soutien (23) forme au moins approximativement un tronc régulier de pyramide avec au moins trois faces latérales (36) et
• la pièce moulée (17) prend appui quand elle n'est pas chargée par sa paroi enveloppante (19) sur les bords longitudinaux (44) de l'appendice (25), tandis que la paroi enveloppante (19) quand elle est chargée s'adapte aux faces latérales (36) de l'appendice (25) ainsi qu'aux dépressions (37).

4. Amortisseur d'oscillations selon la revendication 1,
caractérisé en ce que
• l'une au moins des dépressions (37) est prolongée sur une face frontale (35), située à l'opposé du pied, de l'appendice (25) et débouche à cet endroit dans un alésage (38) qui mène à la chambre (39), et présente un petit diamètre, et,
• la pièce moulée (17) prend appui par une paroi de fond (20), plane au moins à peu près du côté intérieur, et ayant une forme largement rigide, sur la face frontale (35), située à l'opposé du pied, de l'appendice (25).

5. Amortisseur d'oscillations selon la revendication 4,
caractérisé en ce que
la dépression (37), abstraction faite de son parcours situé du côté du pied, a une profondeur qui demeure constante, et se rétrécit quant à sa largeur en direction de la face frontale (35), située à l'opposé du pied, de l'appendice (25), ou a une même largeur et une profondeur qui augmente en direction de la face frontale (35) située à l'opposé du pied.

6. Amortisseur d'oscillations selon la revendication 3,
caractérisé en ce que
la paroi enveloppante (19) de la pièce moulée (17) a la même épaisseur.

7. Amortisseur d'oscillations selon la revendication 4,
caractérisé en ce que
la paroi du fond (20) de la pièce moulée (17) a la forme d'un segment de bille, est de préférence formée comme une demi-bille.

8. Amortisseur d'oscillations selon la revendication 4,
caractérisé en ce que
le bord (18) de l'ouverture de la pièce moulée (17) est maintenue en précontrainte radiale entre le corps de soutien (23) et un gradin (26) de l'alésage du boîtier (12) de façon étanche dans l'alésage du boîtier (11), tandis qu'à l'extérieur des saillies (31), orientées vers une face radiale (32) du gradin de l'alésage (26), et formées sur le bord de l'ouverture (18), prennent appui sur cette face radiale (32).

9. Amortisseur d'oscillations selon la revendication 8,
caractérisé en ce que
le corps de soutien (23) est maintenu par un disque de fermeture (27), qui est maté du côté de l'embouchure dans l'alésage (11) du boîtier (12), à l'encontre de la précontrainte des saillies (31) sur le bord de l'ouverture (18) de la pièce moulée (17).

10. Amortisseur d'oscillations selon la revendication 8,
caractérisé en ce que
la chambre (39) est en liaison dans l'appendice (25) du corps de soutien (23) au moins indirectement par au moins un alésage (40) du disque de fermeture (27) avec l'air extérieur.

11. Amortisseur d'oscillations selon la revendication 10,
caractérisé en ce que
l'alésage (11) du boîtier (12) est fermé à l'extérieur dans une large mesure par un chapeau de recouvrement (41) qui est enclipsé sur le disque de fermeture (27).

12. Amortisseur d'oscillations selon la revendication 10,
caractérisé en ce que
le disque de fermeture (27') porte du côté du corps de soutien une plaque semi-perméable (48), qui est en liaison avec la chambre (39) dans l'appendice (25) du corps de soutien (23) pour l'échange de l'air avec l'air extérieur.

13. Amortisseur d'oscillations selon la revendication 9,
caractérisé en ce que
l'alésage (11) du boîtier (12) est fermé par un disque de fermeture (27'') incassable en une matière poreuse et a un évidement (49) vers le corps de soutien (23), évidement dans lequel est logé une pièce constitutive (50) qui ferme de façon étanche la chambre (39) du corps de soutien (23), pièce constitutive en une matière qui présente une résistance à la diffusion de l'air plus faible que celle de la pièce moulée (17) et est imperméable au liquide de freinage.
